# EUROPEAN PATENT SPECIFICATION

(11) **EP 2 598 265 B1**
(45) Date of publication and mention of the grant of the patent: **14.10.2015**
(21) Application number: 11740612.4
(22) Date of filing: 21.07.2011
(51) Int. Cl.: B21B 43/00

(54) **SYSTEM FOR CHANNELLING AND UNLOADING HOT-ROLLED MATERIALS**
SYSTEM ZUR KANALISIERUNG UND AUSLADUNG VON HEISSGEWALZTEN MATERIALIEN
SYSTÈME POUR CANALISER ET DÉCHARGER DES MATIÈRES LAMINÉES À CHAUD

(30) Priority: 30.07.2010 IT MI20101434
(43) Date of publication of application: 05.06.2013
(73) Proprietor: Primetals Technologies Italy S.R.L., 21050 Marnate (VA) (IT)
(72) Inventor: MUSCARA, Giuseppe, I-20020 Arconate (IT); SHVAYKO, Ruslan, I-22076 Mozzate (IT)
(74) Representative: Metals@Linz
(86) International application number: PCT/EP2011/062555
(87) International publication number: WO 2012/013571

(56) References cited:
- EP-A1- 0 553 930
- WO-A1-2008/128541
- DE-A1- 1 552 906
- IT-B- 1 244 263

## Description

The present invention relates to a system for channelling and unloading hot-rolled materials.

Iron and steel processing plants for working hot-rolled articles are known to have devices which perform cutting and braking of bars or billets, generally referred to as "long products", together with unloading thereof onto cooling beds.

These channelling and unloading devices, which are usually known as guideways, are arranged within the plant downstream of cutting units so as to receive portions of cut products and brake and slow them down so that they may be deposited on an underlying surface known as a cooling bed.

These devices are arranged downstream of drive rolls, equipped with cutting shears and followed by guides which convey the material to the guideways. Moreover, generally devices called "tail brakes" are provided, these conveying the portion of cut product and braking it until the predefined speed for release from the guideway is reached.

As is known, the tail brake devices comprise oppositely arranged rolls provided with a groove for receiving the product being processed. These rolls are rotationally driven by an electric motor which determines the output torque and speed thereof. In this way the tail brake devices apply onto the bar a force in a sense opposite to its movement in a direction perpendicular to the movement of the rolls, which are braked by the torque produced by the electric motor. This force is proportional to the force with which the rolls are pressed against the bar.

The force may not be excessive since it causes a deformation of the bar, said deformation increasing with the deceleration imparted to the bar.

These tail brake devices are very costly since they are operated by motors with associated high-power electric equipment, it being required to produce short bar acceleration and deceleration times depending on the cycles for feeding the material and unloading it onto the cooling bed.

The plant costs are high in the case where there are plants with multiple rolling lines.

These problems are made worse by the fact the bars must leave the braking devices still with a certain residual speed so as to be able to disengage completely from them before entering the guideway.

The residual speed is eliminated inside the guideway by means of natural friction braking with an efficiency which is decidedly less than that of forced braking. In fact the operating times must not negatively affect the time required for unloading the bars onto the underlying cooling bed.

The existing guideway systems consist essentially of two types: rotating channel and fixed channel

The principle of conveying the rolled article in both cases is the same and the only thing which differs is the method of opening the channel. In fact, in the first case, opening is performed by means of rotation of a drum which has inside it several channels for conveying the rolled article, while in the second case, the channel is fixed and opening is performed by moving flaps situated underneath the channel.

As mentioned, the typical plant may perform:
- single-strand rolling
- rolling of two strands from two billets
- rolling of two strands (slitting) from a single billet
- rolling of four strands (quadrislitting) from a single billet.

The system for processing the iron or steel product as a whole is composed of:
- cutting system (dividing shears)
- mechanical acceleration and braking system (bar drives/brake),
- guideway
- cooling bed.

It is also known that the design layout of the abovementioned machines may be different depending on the number of wires or bars being processed, but the parameters (distance between the machines, number of machines, length of the bed, etc.) depend solely on the rolling speed.

A typical known cycle for passage of a bar inside a general guideway may be described as follows:
The bar being rolled passes through deviator and shears and through the tail brakes - which, upon passage of the bar, close in relation to the speed - and enters into the travel channel of the guideway which is closed underneath by a closing flap.

When the cutting length is reached, the shears cut the bar and remaining part of the bar is deviated into the parallel channel.

The first bar is accelerated in order to facilitate the deviation operation and then maintains its speed until the moment of braking which occurs by means of deceleration of the tail brake which ensures contact between bar and rolls, closing them.

When the tail of the bar leaves the tail brake, it is no longer possible to modify the controlled braking operation, and natural braking by means of friction commences. Thereafter, once the bar has reached the unloading position, the closing flap of the travel channel opens and unloads the bar onto the bed.

When the flap is closed again the travel channel of the guideway is ready to receive the next bar.

The next bar follows an identical path and, once unloaded onto the cooling bed, this bed, consisting of alternate rotating toothed supports, performs in general a rotation which causes feeding of the material and frees new spaces where the next bars can be unloaded.

Then, depending on the distance between the tail brake and the unloading position of the bar, it is required to vary the speed of release of the bar in order to ensure the same unloading position. This requires special automated operations in order to ensure that there is little time lost between the unloaded bars. Namely, the greater the distance of the tail brake the greater the braking time which affects the performance features of the system.

In this system, as described, perfect synchronism between the parts which form the guideway is essential. The closing flaps must keep the travel channel perfectly closed so as to prevent deviation of the bar. Moreover, they must support the bar inside the travel channel and, at the right moment, open in order to unload the bar onto the underlying bed.

Examples of systems provided with flaps such as those described above are disclosed in the patents IT 1181214, GB2166677 and EP 189616.

This sometimes gives rise to problems of synchronism and the possibility of production blockages and stoppage.

Moreover, it must be remembered that the presence of the flaps and the associated actuating systems involves plant design and maintenance costs, being parts which are exposed to and in contact with the hot bars.

These systems are also somewhat noisy during operation also owing to the stresses to which they are subject.

The movements of the flaps and the associated mechanism on occasions also limit the operating speed since it is required to wait for the movement of the various parts in synchronism with each other.

Finally, the travel movement of smooth round bars over the flaps may result in damage to the surface of the bars, deforming and denting them.

EP 0553930 discloses a device for receiving bars in channels and laying said bars onto a cooling bed wherein shutter means reciprocate between a closed-channel position and an open-channel position.

IT 1244263 on which the preamble of claim 1 is based discloses a channelling unit equipped with a magnetic source for influencing the path of bars coming off a rolling line wherein closing tiles or supports are used to withhold the bars in the channels as well as to release the bars out of the channels.

The main object of the present invention is therefore to overcome all the abovementioned drawbacks of the prior art in an extremely simple, low-cost and particularly functional manner.

Another object is to provide a system for channelling and unloading hot-rolled materials which does not limit the unloading speeds.

Another object is to provide a system for channelling and unloading hot-rolled materials which does not require complicated and costly motors and actuating systems for performing braking of the incoming hot-rolled article.

Yet another object of the present invention is to provide a system for channelling and unloading hot-rolled materials which has low construction and maintenance costs.

Last but not least, an object of the present invention is to provide a system for channelling and unloading hot-rolled materials which is as simple as possible, keeping to a minimum the need for complicated systems operating in synchronism.

In the light of the abovementioned objects, the idea which has occurred according to the present invention is to provide a system for channelling and unloading hot-rolled materials which has the characteristic features described in the accompanying claims.

The structural and functional features of the present invention and its advantages compared to the prior art will become more clear and evident from a reading of the following description, with reference to the accompanying drawings, which show, among other things, an embodiment of a system for channelling and unloading hot-rolled materials, designed in accordance with the said invention.

In the drawings:

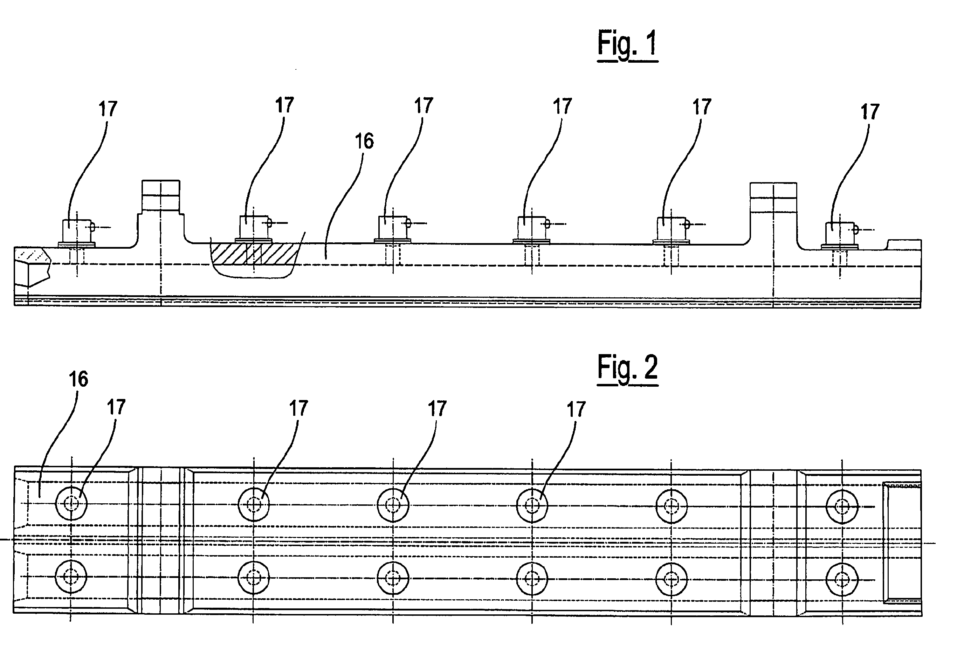

- Figures 1 and 2 show a schematic side elevation view and top plan view of a system for channelling and unloading hot-rolled materials according to the invention;
- Figure 3 is cross-sectional view, on a larger scale, of the system in a first working position arranged above a cooling bed;
- Figure 4 is cross-sectional view, on a larger scale, of the system in a second working position arranged above a cooling bed;
- Figure 5 is cross-sectional view, on a larger scale, of the system in a third working position arranged above a cooling bed.

With reference to the figures, these show a schematic view of a system for channelling and unloading hot-rolled materials according to the invention.

The system is arranged above a cooling bed 11 equipped with alternate and rotating toothed profiles 12 which cause advancing of a rolled material fed at high speed, such as bars 13, placed thereon.

The bars 13 are unloaded onto the bed by a channelling unit 14 which receives them, for example, from a line for performing rolling and cutting to a predetermined size (not shown).

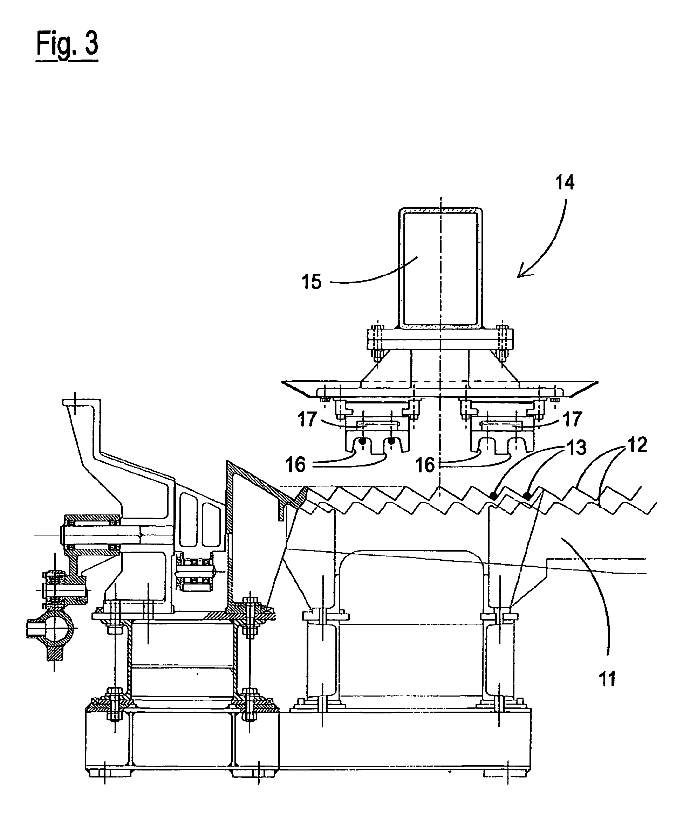

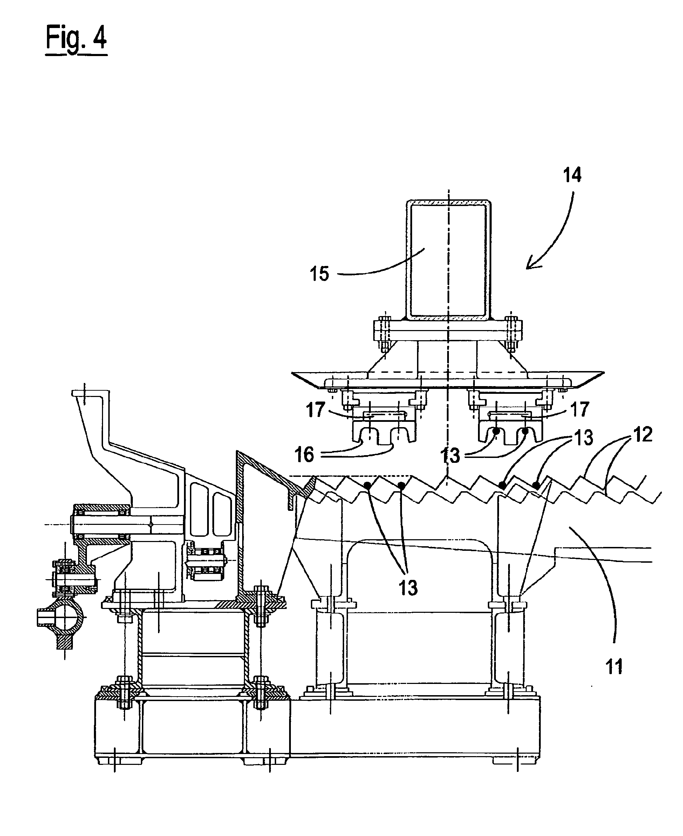

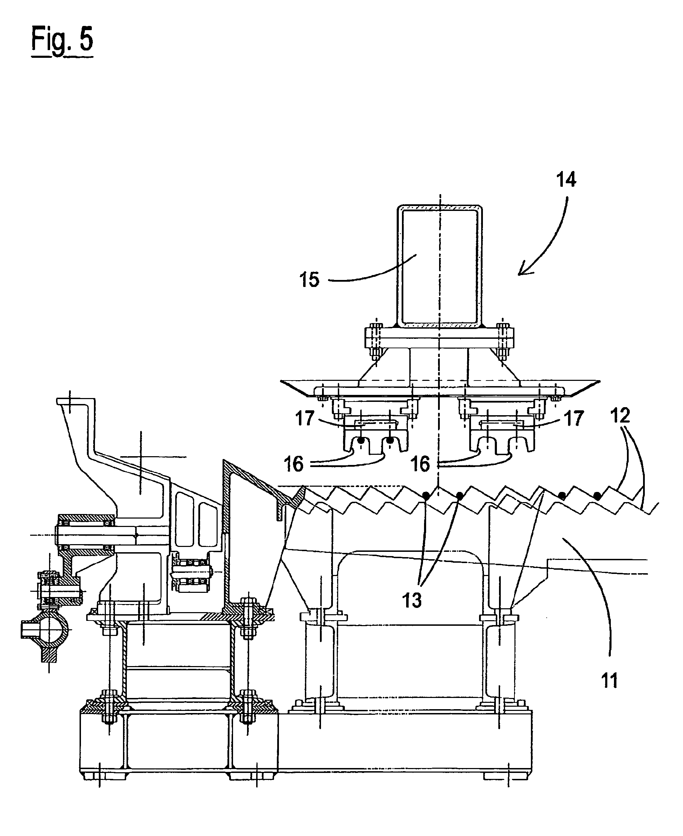

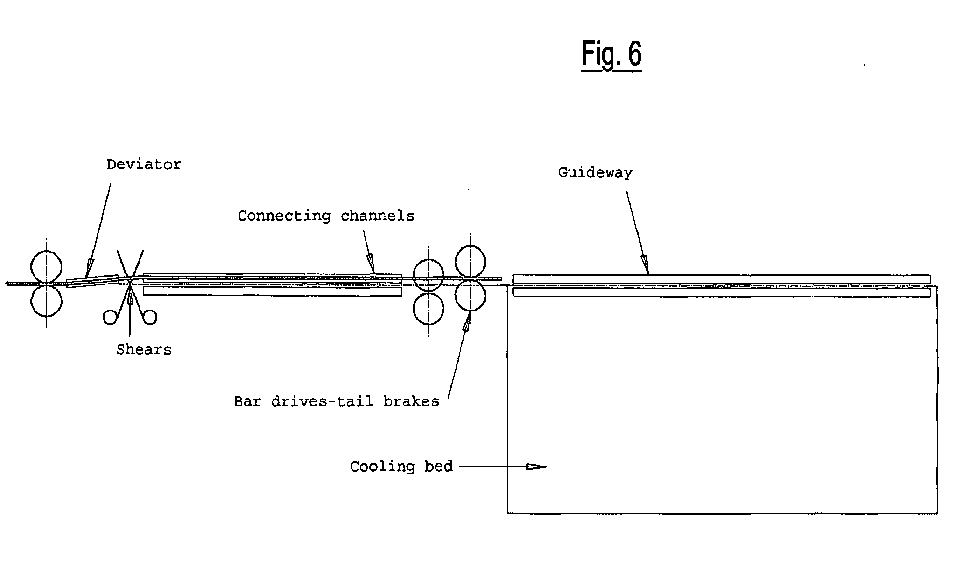

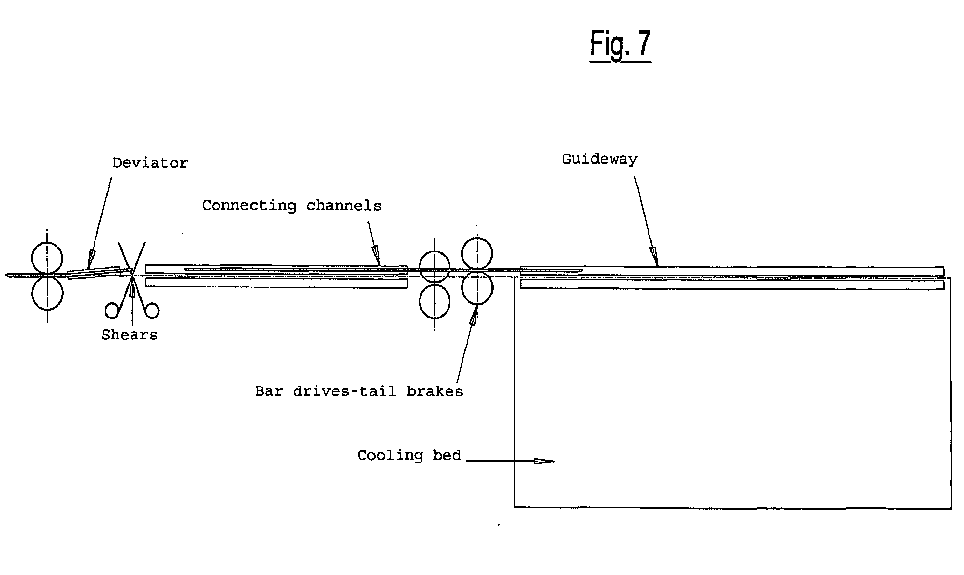

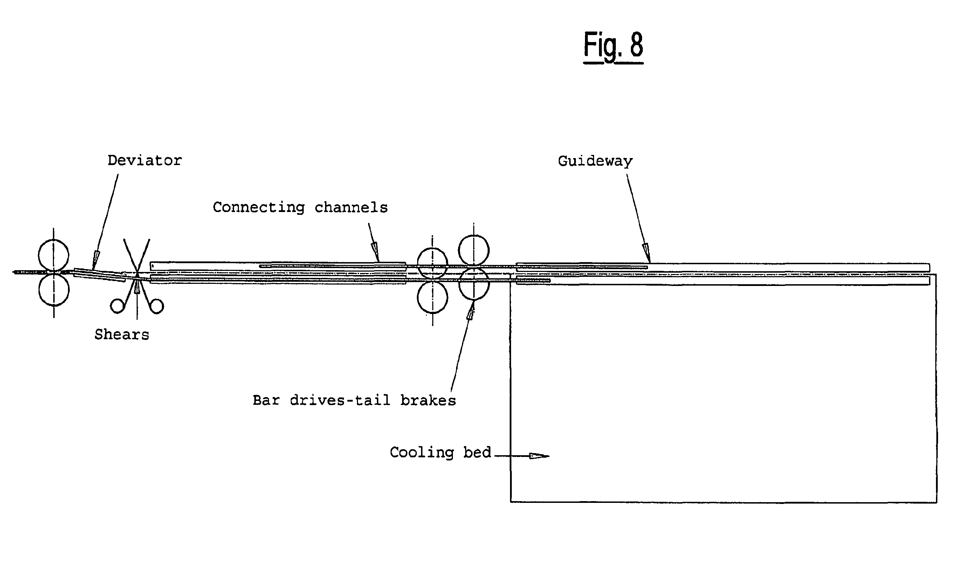

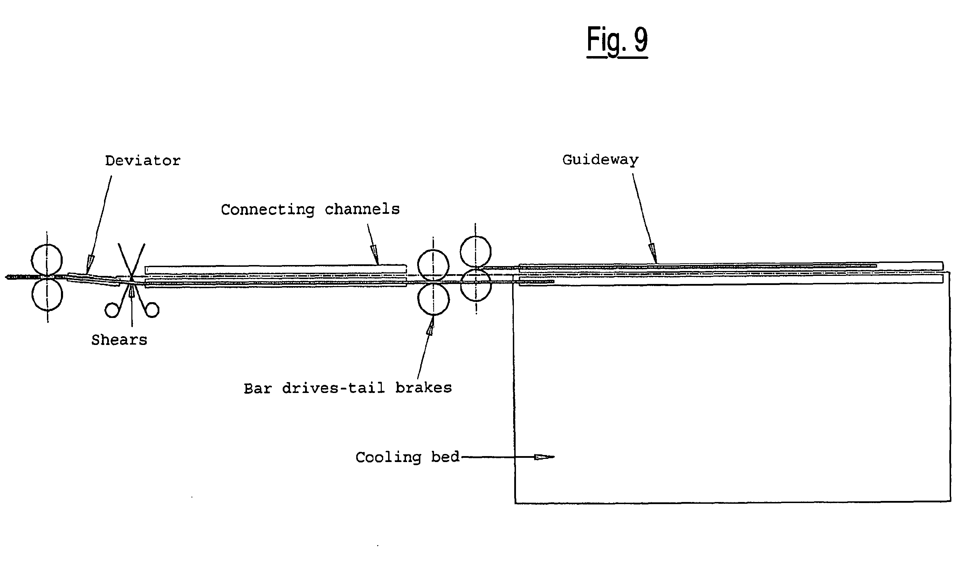

The channelling unit 14 comprises a supporting structure 15 which has at least one travel channel 16 shaped in the manner of an overturned U open downwards. Figures 3 to 5 show a unit comprising two pairs of travel channels 16 arranged alongside each other and parallel so as to be able to perform the processing operations mentioned in the introductory part of the present description.

According to the present invention, electromagnet elements 17, schematically indicated by 17, are mounted on one or more travel channels 16. In the example shown an electromagnetic element 17 is provided for each pair of travel channels 16. It is obvious that such an electromagnetic element 17, by way of example, but not necessarily, extends over the longitudinal length of each pair of travel channels 16 and may be formed in widely varying manners, for example by assembling single elements and connecting them together or in some other way. Alternatively, the single channels or the pairs of channels may be made of suitable material in such a way that this material is activated and deactivated by means of a suitable selectively controllable connection.

What is extremely important is that, according to the invention, owing to the mounting of these electromagnetic elements 17 inside the channels 16, namely the suitable formation of the individual channels 16 using better suited material, the channelling unit 14 is able to perform various functions.

In fact, by means of selective magnetic activation of the channels 16 it is possible to receive and support the bar 13 inside the said channels 16, eliminating the flaps and the system for operating them which are present in the prior art.

Moreover, by means of selective magnetic activation of the channels 16, it is possible to brake the bars 13 no longer using the tail brake as a braking member. The presence of tails brakes is however envisaged upstream of the channelling unit 14, but only for controlling the speed of advancing movement of the bar. This thereby results in a drastic reduction of the installed power (less than half that used previously in the prior art).

Finally, the arrangement of the electromagnetic elements 17 inside the channels 16 or incorporated in the channels 16 ensures better guiding of the bars.

In short, the invention makes use of the fact that the rolled material with ferromagnetic properties is magnetisable, said properties being used both for feeding the rolled material inside the travel channel 16 and for braking and releasing it onto the cooling bed.

Figures 3 to 5 show various steps during which the bars 13 are received, braked and retained inside the travel channels and steps where they are released onto the underlying cooling bed 11.

Release of the bars 13 no longer poses any problem since the flaps and associated mechanism are thus eliminated, avoiding moreover maintenance costs.

In short, the main advantages of the invention can be summarised as follows:
- lower energy consumption
- elimination of the closing flaps and associated operating systems
- lower construction cost
- lower noise level
- higher rolling speed
- less plant maintenance
- rolling of smooth round bars without problems of deformation

The object mentioned in the preamble of the description is thus achieved.

Obviously, the forms of the structure for providing a system for channelling and unloading hot-rolled materials according to the invention may be different from those shown solely by way of a non-limiting example in the drawings and likewise the materials and assembly methods may also differ.

The scope of protection of the invention is therefore defined by the accompanying claims.

## Claims

1. System for channelling and unloading hot-rolled materials downstream of a unit for cutting to size and upstream of a cooling bed (11), in which a rolled material (13) is fed at high speed inside at least one channelling unit (14) and unloaded by the latter onto the cooling bed (11), wherein said channelling unit (14) comprises a supporting structure (15) having at least one travel channel (16) which is open downwards and with which at least one electromagnet element (17) is associated, **characterized in that** no closing flaps and associated operating systems are present.

2. Channelling and unloading system according to Claim 1, **characterized in that** said at least one travel channel (16) is shaped in the manner of an overturned U.

3. Channelling and unloading system according to Claim 1 or 2, **characterized in that** it has at least one pair of adjacent and parallel travel channels (16).

4. Channelling and unloading system according to one or more of the preceding claims, **characterized in that** said at least one electromagnetic element (17) extends over the entire longitudinal length of said at least one travel channel (16).

5. Channelling and unloading system according to one or more of the preceding claims, **characterized in that** said at least one electromagnetic element (17) is mounted above said at least one travel channel (16).

6. Channelling and unloading system according to one or more of the preceding claims, **characterized in that** said at least one electromagnetic element (17) is formed as one piece with said at least one travel channel (16).

7. Channelling and unloading system according to Claim 1, **characterized in that** said at least travel channel (16) associated with said at least one electromagnetic element (17) performs simultaneously the function of a system for guiding, braking and releasing said rolled material (13).

8. Channelling and unloading system according to anyone of the preceding claims, wherein said at least one electromagnetic element (17) is arranged inside said at least one travel channel (16) or therein incorporated.

## Patentansprüche

1. System zum Kanalisieren und Entladen warmgewalzter Materialien stromabwärts einer Einheit zum Zuschneiden und stromaufwärts eines Kühlbetts (11), in welches ein Walzgut (13) mit hoher Geschwindigkeit innerhalb wenigstens einer Kanalisierungseinheit (14) eingespeist und von der Letzteren auf das Kühlbett (11) entladen wird, wobei diese Kanalisierungseinheit (14) eine Stützkonstruktion (15) umfasst, die wenigstens einen Förderkanal (16) aufweist, welcher nach unten offen ist und welchem wenigstens ein Elektromagnetelement (17) zugeordnet ist, **dadurch gekennzeichnet, dass** keine Schließklappen und zugeordnete Betätigungssysteme vorhanden sind.

2. Kanalisierungs- und Entladesystem nach Anspruch 1, **dadurch gekennzeichnet, dass** der wenigstens eine Förderkanal (16) in der Art eines umgekehrten "U" geformt ist.

3. Kanalisierungs- und Entladesystem nach Anspruch 1 oder 2, **dadurch gekennzeichnet, dass** es wenigstens ein Paar benachbarter und paralleler Förderkanäle (16) aufweist.

4. Kanalisierungs- und Entladesystem nach einem oder mehreren der vorhergehenden Ansprüche, **dadurch gekennzeichnet, dass** sich das wenigstens eine Elektromagnetelement (17) über die gesamte Länge in Längsrichtung des wenigstens einen Förderkanals (16) erstreckt.

5. Kanalisierungs- und Entladesystem nach einem oder mehreren der vorhergehenden Ansprüche, **dadurch gekennzeichnet, dass** das wenigstens eine Elektromagnetelement (17) über dem wenigstens einen Förderkanal (16) angebracht ist.

6. Kanalisierungs- und Entladesystem nach einem oder mehreren der vorhergehenden Ansprüche, **dadurch gekennzeichnet, dass** das wenigstens eine Elektromagnetelement (17) einstückig mit dem wenigstens einen Förderkanal (16) ausgebildet ist.

7. Kanalisierungs- und Entladesystem nach Anspruch 1, **dadurch gekennzeichnet, dass** der wenigstens eine Förderkanal (16), dem das wenigstens eine Elektromagnetelement (17) zugeordnet ist, gleichzeitig die Funktion eines Systems zum Führen, Bremsen und Loslassen des Walzgutes (13) erfüllt.

8. Kanalisierungs- und Entladesystem nach einem der vorhergehenden Ansprüche, wobei das wenigstens eine Elektromagnetelement (17) innerhalb des wenigstens einen Förderkanals (16) angeordnet ist oder in diesen integriert ist.

## Revendications

1. Système de canalisation et de décharge de matières laminées à chaud en aval d'une unité de coupe à dimension et en amont d'un refroidissoir (11), dans lequel une matière laminée (13) est introduite à grande vitesse à l'intérieur d'au moins une unité de canalisation (14) et déchargée par cette dernière sur le refroidissoir (11), étant entendu que ladite unité de canalisation (14) comprend une structure porteuse (15) comportant au moins un canal de circulation (16) qui est ouvert vers le bas et auquel au moins un élément électromagnétique (17) est associé, **caractérisé en ce qu'**aucun volet de fermeture et aucun système d'exploitation associé ne sont présents.

2. Système de canalisation et de décharge selon la revendication 1, **caractérisé en ce que** ledit au moins un canal de circulation (16) est conformé à la façon d'un U renversé.

3. Système de canalisation et de décharge selon la revendication 1 ou 2, **caractérisé en ce qu'**il comporte au moins une paire de canaux de circulation (16) adjacents et parallèles.

4. Système de canalisation et de décharge selon une ou plusieurs des revendications précédentes, **caractérisé en ce que** ledit au moins un élément électromagnétique (17) s'étend sur toute la longueur longitudinale dudit au moins un canal de circulation (16).

5. Système de canalisation et de décharge selon une ou plusieurs des revendications précédentes, **caractérisé en ce que** ledit au moins un élément électromagnétique (17) est monté au-dessus dudit au moins un canal de circulation (16).

6. Système de canalisation et de décharge selon une ou plusieurs des revendications précédentes, **caractérisé en ce que** ledit au moins un élément électromagnétique (17) est formé d'un seul tenant avec ledit au moins un canal de circulation (16).

7. Système de canalisation et de décharge selon la revendication 1, **caractérisé en ce que** ledit au moins un canal de circulation (16) associé audit au moins un élément électromagnétique (17) exécute simultanément la fonction de système de guidage, de freinage et de libération de ladite matière laminée (13).

8. Système de canalisation et de décharge selon l'une quelconque des revendications précédentes, **caractérisé en ce que** ledit au moins un élément électromagnétique (17) est agencé à l'intérieur dudit au moins un canal de circulation (16) ou y est incorporé.
